# EUROPEAN PATENT SPECIFICATION

(11) **EP 0 965 178 B1**
(45) Date of publication and mention of the grant of the patent: **03.03.2004**
(21) Application number: 96923523.3
(22) Date of filing: 27.06.1996
(51) Int. Cl.: H04B 3/00, H04B 3/54, H04B 3/56

(54) **SYSTEM AND COUPLING CIRCUIT FOR POWER LINE COMMUNICATIONS**
SYSTEM UND ANKOPPELSCHALTUNG ZUR NACHRICHTENÜBERTRAGUNG
SYSTEME ET CIRCUIT DE COUPLAGE POUR COMMUNICATIONS PAR LIGNE ELECTRIQUE

(43) Date of publication of application: 22.12.1999
(73) Proprietor: PHONEX CORPORATION, Midvale, UT 84047-3756 (US)
(72) Inventor: PATEL, Chandrakant, Bhailalbhai, Hopewell, NJ 08525-3114 (US); HARFORD, Jack, Rudy, Flemington, NJ 08822 (US); KLEIN, Henry, Charles, West Chester, PA 19382 (US); WALD, Edward, Alan, Bensalem, PA 19020 (US)
(74) Representative: Ricker, Mathias, Dr.Dipl.-Chem.
(86) International application number: PCT/US1996/011057
(87) International publication number: WO 1997/050190

(56) References cited:
- EP-A- 0 463 341
- WO-A-90/13950
- US-A- 4 847 903

## Description

The present invention relates, in general, to the communication of information along power lines and, in particular, to coupling circuitry by which a source of information signals or a utilization unit is connected to a power line.

The lines by which power is distributed in a building can be and are used for the transmission of information signals between rooms within a building. A very important component in a power line communications system is the coupling circuitry by which a source of information signals (e.g. a telephone line or a cable television connection box which supplies cable television signals) is connected to the power line or a utilization unit (e.g. a telephone extension or a television set) in connected to the power line. The coupling circuitry is intended to provide isolation from the power line, impedance matching to the power line, and required filtering of signals transmitted and received along the power line to pass the desired signal for necessary processing.

Generally, coupling circuitry of this type, which is known today, provides inadequate selectivity and impedance matching. One known type includes a unified coupler. A major shortcoming of a unified coupler is the inability to balance the required function and performance of the coupler. A compromise is made to match impedance to retain the filter frequency response characteristic over the expected power line impedance variations. Such design requirements severely limit usage of unified couplers.

Generally, a unified coupler has primary and secondary windings for coupling signals between the power line and the transmitter unit or the receiver unit. The windings are designed to provide impedance matching as well as frequency selectivity. To provide possible low power impedance matching, special wiring material is used which has resistivity. The length of the wire forming the coil is selected for the required inductance and a coupling capacitor is selected to provide the desired frequency response characteristic. Thus, with a unified coupler, the parameters controlling the frequency response characteristic are wire resistance, the inductance of the wire and the capacitor. This, in itself, indicates the limitation of a unified coupler. Specifically, with only one set of parameters, namely R, L and C, the required bandwidth of desired in-band frequencies and rejection of out-of-band frequencies is drastically limited by the Q of the tuned circuit. Impedance matching is also limited for desired signal transfer. The coupling capacitor, being part of the band shaping, must be selected to provide a specific value as well as to provide AC coupling to the power line.

From EP-A-0 463 341 a power line communication system is known which employs a coupling circuit for coupling information signals to and from a power line and which comprises a ferrite core coupler for providing isolation from the power line and for transmitting information signals. This system is limited to one single coupling circuit and cannot use more than one circuit simultaneously within the system.

Based on the aforementioned drawbacks in prior art power line communication systems, it is therefore an object of the invention to provide an improved coupling circuitry using more than one circuit which enables adequate selectivity and impedance matching and which can be multi-functionally used.

This object is solved by a power line communication system according to claim 1.

In accordance with the present invention, a coupling circuit for a power line communications system for coupling information signals to and from a power line includes a ferrite core coupler for isolating at least one of a transmitter unit from the power line and a receiver unit from the power line and coupling at least one of information signals from the transmitter unit to the power line and information signals from the power line to the receiver unit. This coupling circuit also includes a bandpass filter for selectively passing at least one of information signals from the transmitter unit to the power line and information signals from the power line to the receiver unit. This coupling circuit further includes an impedance matching pad for minimizing mismatches between at least one of the impedance of the bandpass filter of the transmitter unit and the impedance at an outlet connected to the power line and to which the transmitter unit is connected and the impedance of the bandpass filter of the receiver unit and the impedance at an outlet connected to the power line and to which the receiver unit is connected.

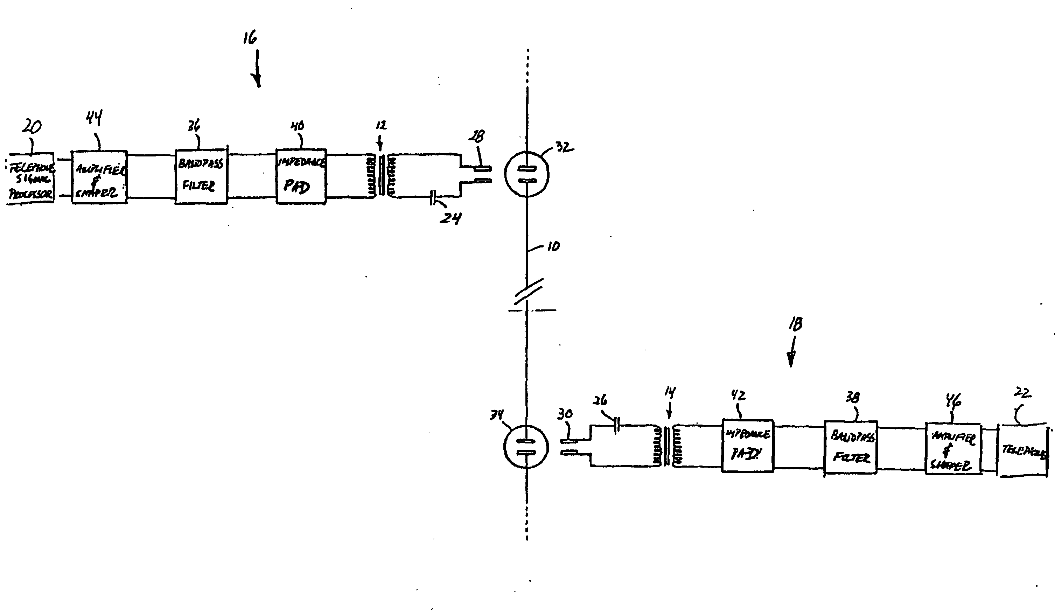

The single figure is a diagram of a power line communications system in which a coupling circuit, constructed in accordance with the present invention, is incorporated.

Referring to the drawing, a coupling circuit for a power line communications system for coupling information signals to and from a power line **10**, constructed in accordance with the present invention, includes a ferrite core coupler **12** or **14** for isolation at least one of a transmitter unit **16** (i.e. coupler **12**) from the power line and a receiver unit **18** (i.e. coupler **14**) from the power line. Ferrite couplers **12** and **14** also couple information signals from transmitter unit **16** (i.e. coupler **12**) to power line **10** and from power line **10** to receiver unit **18** (i.e. coupler **14**).

Ferrite core couplers **12** and **14** function as signal transformers. They are preferably arranged to exhibit a sharp roll off below a frequency of 1 MHz, thereby attenuating interference from 60 Hz and harmonics of 60 Hz. The ferrite material is selected for the frequency range of operation, namely the nature and character of the information signals. For example, the information signals can be processed telephone signals supplied by a telephone signal processor **20**, by which telephone signals are delivered to a building, and conducted to a telephone **22**. In addition, the present invention can handle audio, television, local area network, and control information signals.

The design parameters of ferrite core couplers **12** and **14** include the size and material of the bead or core and the number of turns. Usually, a bifilar wire is used, thereby providing close coupling between the input and the output. Capacitors **24** and **26** and plugs **28** and **30** connect couplers **12** and **14**, respectively, to power line **10** by way of outlets **32** and **34**, respectively, which are connected to the power line.

A coupling circuit for a power line communications system, constructed in accordance with the present invention, also includes a band pass filter **36** or **38** for selectively passing at least one of information signals from transmitter unit **16** (i.e. filter **36**) to power line **10** and information signals from power line **10** to receive unit **18** (i.e. filter **38**). Bandpass filters **36** and **38** are designed to provide minimal distortion at the frequencies of interest and attenuate out-of-band noise and interference to and from the transmitter unit and the receiver unit. Specific traps also can be designed to reject known interfering signals to improve system performance.

A coupling circuit for a power line communications system, constructed in accordance with the present invention, further includes an impedance matching pad **40** or **42** for minimizing mismatches between at least one of the impedance of bandpass filter **36** of transmitter unit **16** (i.e. impedance pad **40**) and the impedance at outlet **32** connected to power line **10** and to which transmitter unit **16** is connected and the impedance of bandpass filter **38** of receive unit **18** (i.e. impedance pad **42**) and the impedance at outlet **34** connected to power line **10** and to which the receive unit **18** is connected. A power line, for example from outlet **32** to outlet **34,** presents different loads at different times in a power line communications system. Impedance pads **40** and **42,** respectively, placed between coupler **12** and bandpass filter **36** and between coupler **14** and bandpass filter **38,** alleviate the effect of wide variations of impedance mismatches between power line **10** and bandpass filters **36** and **38,** while retaining the frequency response characteristics of bandpass filters **36** and **38.**

Transmitter unit **16** preferably includes amplifier and shaper means **44,** disposed between telephone signal processor **20** and bandpass filter **36,** for amplifying and shaping the information signals supplied to transmitter unit **16** from telephone signal processor **20.** Likewise, receive unit **18** preferably includes amplifier and shaper means **46,** disposed between bandpass filter **38** and telephone **22,** for amplifying and shaping the information signals supplied by receiver unit **16** to telephone **22.**

Coupler **12**, bandpass filter **36**, and impedance pad **40** and coupler **14**, bandpass filter **38,** and impedance pad **42** form coupling circuits which allow the selection of selectivity for a given application. For example, in telephone signal transmissions, the signal bandwidth is less than 25 KHz, while in television signal transmissions the signal bandwidth is at least 6 MHz.

## Claims

1. Power line communication system comprising
a power line (10),
a transmitter unit (16) including
a first ferrite core coupler (12),
a first bandpass filter (36),
a first impedance matching pad (40) and
first amplifier and shaper means (44),
a receiver unit (18) including
a second ferrite core coupler (14),
a second bandpass filter (38),
a second impedance matching pad (42) and
second amplifier and shaper means (46),
whereas the power line (10), the transmitter unit (16) and the receiver unit (18) are simultaneously forming different coupling circuits, in that parameters of the first and second ferrite core couplers (12;14), the first and second bandpass filters (36;38), the first and second impedance matching pad (40;42) and first and second amplifier and shaper means (44;46) are selectively tuned for a given application.

2. Power line communication system according to claim 1, whereas the a plurality of outlets (32,34) are individually connected to said power line (10).

## Patentansprüche

1. Nachrichtenübertragungsystem umfassend
eine Stromleitung (10),
eine Sendeanlage (16), einschließlich
eines ersten Ferritkemkupplers (12),
eines ersten Bandpassfilters (36),
eines ersten Anpassungsunterbaus (40) und
erster Verstärker- und Formerhilfsmittel (44),
eine Empfangsanlage (18), einschließlich
eines zweiten Ferritkernkupplers (14),
eines zweiten Bandpassfilters (38),
eines zweiten Anpassungsunterbaus (42) und
zweiter Verstärker- und Formerhilfsmittel (46),
wobei die Stromleitung (10), die Sendeanlage (16) und die Empfangsanlage (18) simultan unterschiedliche Ankoppelschaltungen bilden, und wobei die Parameter des ersten und zweiten Ferritkernkupplers (12; 14), des ersten und zweiten Bandpassfilters (36; 38), des ersten und zweiten Anpassungsunterbaus (40; 42) und der ersten und zweiten Verstärker- und Formerhilfsmittel (44; 46) selektiv für eine gegebene Verwendung abgeglichen sind.

2. Nachrichtenübertragungsystem nach Anspruch 1, wobei die Mehrzahl von Absatzmöglichkeiten (32, 34) individuell an die Stromleitung (10) gebunden ist.

## Revendications

1. Système de communication sur ligne d'alimentation, comprenant :
une ligne d'alimentation (10),
un bloc émetteur (16) comprenant
un premier coupleur à noyau de ferrite (12),
un premier filtre passe-bande (36),
un premier réseau d'adaptation d'impédance (40) et
un premier moyen d'amplification et de mise en forme (44),
un bloc récepteur (18) comprenant
un second coupleur à noyau de ferrite (14),
un second filtre passe-bande (38),
un second réseau d'adaptation d'impédance (42) et
un second moyen d'amplification et de mise en forme (46),
en considération du fait que la ligne d'alimentation (10), le bloc émetteur (16) et le bloc récepteur (18) forment simultanément des circuits de couplage différents, en ce que les paramètres du premier et du second coupleurs à noyau de ferrite (12 ; 14), du premier et du second filtres passe-bande (36 ; 38), du premier et du second réseaux d'adaptation d'impédance (40 ; 42) et du premier et du second moyens d'amplification et de mise en forme (44 ; 46) sont sélectivement accordés pour une application donnée.

2. Système de communication sur ligne d'alimentation selon la revendication 1, en considération du fait qu'une pluralité de sorties (32, 34) sont individuellement reliées à ladite ligne d'alimentation (10).
